# EUROPÄISCHE PATENTSCHRIFT

(11) **EP 2 202 025 B1**
(45) Veröffentlichungstag und Bekanntmachung des Hinweises auf die Patenterteilung: **27.06.2012**
(21) Anmeldenummer: 09014794.3
(22) Anmeldetag: 27.11.2009
(51) Int. Cl.: B23K 20/12, B21B 15/00, B21C 47/24

(54) **Verfahren und Vorrichtung zum Verbinden von Metallbändern durch Reibpunktschweissen**
Method of and device for connecting metal bands with friction stir spot welding
Procédé et dispositif pour connecter des bandes de métal utilisant le soudage pontuel par friction agitation

(30) Priorität: 29.12.2008 DE 102008063277
(43) Veröffentlichungstag der Anmeldung: 30.06.2010
(73) Patentinhaber: BWG BERGWERK- UND WALZWERK-MASCHINENBAU GMBH, 47051 Duisburg (DE)
(72) Erfinder: Noé, Andreas, Dr., 47647 Kerken (DE); Baukloh, Dieter, 47053 Duisburg (DE); Sonntag, Stefan, 47249 Duisburg (DE); Ambaum, Friedhelm, 47259 Duisburg (DE)
(74) Vertreter: von dem Borne, Andreas

(56) Entgegenhaltungen:
- DE-T2- 69 714 104
- JP-A- 61 176 484
- JP-A- 2004 276 056
- JP-A- 2006 000 901
- US-A1- 2001 038 028
- US-A1- 2006 138 197

## Beschreibung

Die Erfindung betrifft ein Verfahren sowie eine Vorrichtung zum Verbinden eines Bandendes eines ersten Metallbandes mit dem Bandanfang eines zweiten Metallbandes gemäß dem Oberbegriff der Ansprüche 1 und 10 (siehe, z.B., JP 2006/000901).

In Bandbehandlungsanlagen, welche auch als Bandprozesslinien bezeichnet werden, werden in der Regel zu Bunden (Coils) aufgewickelte Bänder im Einlaufteil abgewickelt, durchlaufen dann eine oder mehrere Behandlungsstationen und werden im Auslaufteil gegebenenfalls wieder aufgewickelt oder alternativ auch zu Tafeln geschnitten. Damit die Bänder nicht stets neu eingefädelt werden müssen, wird der Bandanfang eines neuen Bundes mit dem Bandende des letzten Bundes verbunden. In diesem Zusammenhang ist es aus der Praxis bekannt, die Metallbänder durch Schweißverbindungen miteinander zu verbinden.

Bei verschiedenen Metallbandtypen und insbesondere Metallbändern aus Aluminiumlegierungen bereiten Schweißverbindungen in der Praxis häufig Schwierigkeiten. So bereitet beispielsweise das Widerstandspunktschweißen bei Aluminiumlegierungen das Problem der Spritzerbildung. Es besteht ferner die Gefahr des Anklebens der Elektrode am Band und aufgrund des Nebenschlusses sind Mindestabstände zwischen zwei benachbarten Schweißpunkten erforderlich. Einige Legierungen sind mittels Widerstandspunktschweißen überhaupt nicht schweißbar. Ähnliches gilt für das Rollnahtschweißen, welches bei Aluminiumlegierungen ebenfalls das Problem der Spritzerbildung aufweist und im Übrigen eine geringe Nahtqualität besitzt. Auch beim Rührreibschweißen ergeben sich schlechte Nahtqualitäten, insbesondere bei geringen Banddicken.

Aus diesem Grunde wurde alternativ zum Schweißen auch auf Stanzverbindungen zurückgegriffen, welche auch als Stitchen bezeichnet werden und in der Regel bis zu einer Banddicke von ca. 6 mm einsetzbar sind. Problematisch ist dabei häufig die Tatsache, dass im Zuge des Stanzens durch die Schneidspalte der Stanzwerkzeuge bedingte Grate oder noch lose bzw. noch leicht mit den Bändern verbundene Flitterpartikel entstehen. Während die Bänder eine Bandprozesslinie durchlaufen und dabei Prozesslinienrollen umlaufen, können Grate oder Flitterpartikel abbrechen und an den Prozesslinienrollen haften bleiben, insbesondere dann, wenn es sich um kunststoffbeschichtete Rollen handelt. Um dieses zu verhindern, ist es grundsätzlich bekannt, Stanzverbindungen mittels Klebeband abzukleben (vgl. z.B. DE 10 2005 037182 A1). Im Übrigen werden in der Praxis auch Klebeverbindungen eingesetzt, jedoch in der Regel lediglich bis zu einer Banddicke von maximal 1 mm. Bei größeren Banddicken besteht die Gefahr, dass die Klebenaht in der Bandbehandlungslinie beim Überlaufen von Rollen wegen der Biegesteifigkeit der Bänder aufgeschält wird.

Schließlich ist aus der DE 697 14 104 T2 ein Punktschweißkopf für eine Umreifungsmaschine bekannt, wobei in einer solchen Umreifungsmaschine z. B. eine Stahlbandrolle, eine Drahtrolle, eine Gruppe von Rohren bzw. Stangen oder Stäben oder ein Plattenstapel mit einem Stahlband umreift wird. Die überlappenden Abschnitte eines solchen Stahlbandes können durch Punktschweißen miteinander verbunden werden.

Der Erfindung liegt die Aufgabe zugrunde, ein Verfahren zum Verbinden von Metallbändern, insbesondere im Einlaufbereich einer Bandbehandlungsanlage der eingangs beschriebenen Art durch Schweißverbindung zu schaffen, welches universell für verschiedene Metalllegierungen und insbesondere Aluminium bzw. Aluminiumlegierungen einsetzbar ist und insbesondere ohne störende Gratbildung realisiert werden kann.

Ein Verfahren gemäß der Erfindung ist im Anspruch 1 definiert. Beim Reibpunktschweißen wird eine punktförmige Schweißverbindung ohne Materialzugabe hergestellt. Die Plastifizierung des Werkstoffes wird durch Reibungswärme eines rotierenden Schweißwerkzeuges erzeugt, welches mit definiertem Druck auf die Metallbänder arbeitet und in die Metallbänder eindringt, sodass es zu einer Vermischung des Werkstoffes bzw. der Werkstoffe der Metallbänder kommt. Es kann ein herkömmliches Reibpunktschweißverfahren eingesetzt werden, bei welchem ein rotierendes Werkzeug, z. B. ein rotierender Stift auf die Bänder arbeitet. Besonders bevorzugt werden die Schweißpunkte durch Reibpunktschweißen mit einem Schweißkopf gesetzt, welcher einen rotierenden Stift oder stiftartigen Vorsprung und eine den Stift bzw. den stiftartigen Vorsprung umgebende rotierende Hülse aufweist, wobei der Stift und/oder die Hülse durch Rotation und damit erzeugte Reibungswärme das Bandende und den Bandanfang bereichsweise plastifiziert, wobei Stift und Hülse während des Schweißens zumindest zeitweise axial in entgegengesetzten Richtungen zueinander verschoben werden. Diese Technologie des Reibpunktschweißens ist grundsätzlich bekannt (vgl. z. B. DE 199 55 737 B4). Bei der hier bevorzugt eingesetzten Variante des Reibpunktschweißes mit rotierendem Stift und/oder rotierender Hülse, welche gegenläufig in axialer Richtung bewegt werden und bei welchem Stift und/oder Hülse in die Metallbänder eindringen, wird verhindert, dass der verdrängte Werkstoff unkontrolliert in die Umgebung abfließt und somit für die Ausführung der Verbindung nicht mehr zur Verfügung steht. Der gesamte plastifizierte Werkstoff bildet die Schweißverbindung. Es ist z. B. vorgesehen, dass der rotierende Stift in die Metallbänder eindringt und zugleich die den Stift umgebende Hülse zurückgezogen wird, sodass der verdrängte Werkstoff in der unmittelbaren Umgebung des Stiftes gehalten wird. Ist die gewünschte axiale Eindringtiefe erreicht, wird der stiftartige Vorsprung in die Ausgangsstellung zurückbewegt und zugleich die Hülse in entgegengesetzter Richtung bewegt, sodass der Werkstoff vollständig zurückgedrückt wird. Umgekehrt besteht auch die Möglichkeit, dass zunächst die Hülse in die Werkstücke bzw. Bänder eindringt und der Stift herausgezogen wird. Stets wird gewährleistet, dass zunächst in einem ersten Prozessschritt ausreichend Raum für den verdrängten Werkstoff zur Verfügung gestellt wird und dass dann in einem zweiten Prozessschritt mit umgekehrter Bewegungsrichtung von Stift und Hülse der Werkstoff zurück in den Fügebereich unter Bildung der Schweißverbindung gedrückt wird. Von besonderer Bedeutung ist die Tatsache, dass mit diesem Verfahren zuverlässige Schweißverbindungen bei verschiedensten Metalllegierungen und insbesondere auch bei Aluminiumlegierungen möglich sind. Es kommt zu keiner bzw. keiner nennenswerten Gratbildung, sodass hervorragende Oberflächen entstehen, die insbesondere beim Durchlauf durch die Bandbehandlungsanlage keine Störungen verursachen. Der Verwendung des an sich bekannten Reibpunktschweißens im Zuge der Verbindung von Bandenden von Metallbändern kommt folglich im Rahmen der Erfindung besondere Bedeutung zu. Überraschenderweise lassen sich Bandverbindungen hoher Qualität und hoher Festigkeit erzeugen, die auch den hohen Beanspruchungen in Bandbehandlungsanlagen genügen.

Vorteilhafte Weiterbildungen der Erfindung werden im Folgenden erläutert:
Bevorzugt werden zeitgleich und/oder nacheinander mehrere quer zur Bandlaufrichtung beabstandete Schweißpunkte unter Bildung einer sich über die Bandbreite erstreckenden Schweißpunktreihe gesetzt. Die Bandbreite beträgt in der Regel mehr als 500 mm, vorzugsweise mehr als 1000 mm, z. B. mehr als 1500 mm. Der Abstand zweier benachbarter Schweißpunkte einer Schweißpunktreihe kann z. B. 20 mm bis 100 mm, vorzugsweise 30 mm bis 70 mm betragen. Insgesamt gelingt eine hervorragende Verbindung über (nahezu) die gesamte Bandbreite. Dabei kann es zweckmäßig sein, wenn der Abstand zweier benachbarter Schweißpunkte einer Schweißpunktreihe von der Bandmitte zu einem Bandrand oder zu den Bandrändem hin zunimmt. Dadurch lässt sich die Festigkeit der Verbindung bei gegebener Schweißzeit optimieren. Die Erfindung umfasst jedoch auch Ausführungsformen, bei denen der Abstand zweier benachbarter Schweißpunkte über die Bandbreite konstant ist.

Die Bandverbindung kann noch dadurch optimiert werden, dass in Bandlaufrichtung hintereinander versetzt mehrere Schweißpunkte oder insbesondere mehrere Schweißpunktreihen mit jeweils mehreren Schweißpunkten gesetzt werden.

Grundsätzlich besteht die Möglichkeit, eine Bandverbindung mit einem einzigen Schweißkopf herzustellen. Dann kann es zweckmäßig sein, den Schweißkopf quer zur Bandlaufrichtung und/oder entlang der Bandlaufrichtung zu verfahren, um mehrere Schweißpunkte nacheinander zu setzen. Bevorzugt werden jedoch mit mehreren quer zur Bandlaufrichtung verteilten Schweißköpfen mehrere Schweißpunkte zeitgleich gesetzt, sodass die Gesamtschweißzeit verringert wird. Auch bei einer solchen Ausführungsform ist es jedoch zweckmäßig, wenn diese Schweißköpfe quer zur Bandlaufrichtung und/oder entlang der Bandlaufrichtung verfahrbar sind, um eine Bandverbindung herstellen zu können, die mehr Schweißpunkte als Schweißköpfe ausweist. Geht man von einer Bandbreite von z. B. 2000 mm aus und nimmt einen Abstand der Schweißpunkte von z. B. 50 mm an, so werden 40 Schweißpunkte gesetzt. Bei einer Einzelschweißzeit von z. B. 5 Sekunden ergibt sich eine Gesamtschweißzeit von 200 Sekunden, wenn mit lediglich einem Schweißkopf gearbeitet wird. Wird stattdessen mit fünf Schweißköpfen gearbeitet, so reduziert sich die Gesamtschweißzeit auf 40 Sekunden.

Bevorzugt schlägt die Erfindung jedoch die Verwendung von zumindest zwei Bandklemmvorrichtungen, nämlich einer einlaufseitigen Bandklemmvorrichtung und einer auslaufseitigen Bandklemmvorrichtung vor. Die einlaufseitige Bandklemmvorrichtung ist dabei vorzugsweise um ein vorgegebenes Maß vor den Schweißköpfen angeordnet. Sie fixiert vorzugsweise lediglich den Bandanfang des zweiten Metallbandes. Die auslaufseitige Bandklemmvorrichtung kann in etwa im Bereich der Schweißköpfe angeordnet sein und sowohl das Bandende des ersten Metallbandes als auch den Bandanfang des zweiten Metallbandes fixieren.

Im Übrigen kann es zweckmäßig sein, das Bandende und den Bandanfang vor dem Schweißen adhesiv miteinander zu verbinden, z. B. miteinander zu verkleben. Damit kann z. B. eine besonders dichte Naht erzeugt werden, sodass das Eindringen von Feuchtigkeit innerhalb der Bandbehandlungslinie verhindert wird. Außerdem kann gegebenenfalls durch eine Verklebung die Anzahl der Schweißpunkte reduziert werden, ohne dass die Festigkeit der Verbindung verringert wird.

Im Rahmen der Erfindung besteht grundsätzlich die Möglichkeit, im Überlappungsbereich den Bandanfang des zweiten Metallbandes auf das Bandende des ersten Metallbandes zu legen oder umgekehrt das Bandende des ersten Metallbandes auf den Bandanfang des zweiten Bandes zu legen. Sofern erstes Metallband und zweites Metallband dieselbe Dicke aufweisen und aus demselben Material bestehen, bestehen diese beiden Möglichkeiten gleichermaßen nebeneinander. Sofern insbesondere Bänder unterschiedlicher Dicke miteinander verbunden werden, besteht grundsätzlich die Möglichkeit, das Metallband mit geringerer Dicke oberseitig auf das Metallband mit größerer Dicke aufzulegen. Besonders bevorzugt schlägt die Erfindung jedoch vor, dass im Falle unterschiedlicher Banddicken das Metallband mit größerer Dicke auf der dem Schweißkopf zugewandten Seite angeordnet ist, z. B. oberseitig auf das Metallband mit geringerer Dicke aufgelegt wird. Denn Versuche haben überraschenderweise ergeben, dass die Scherzugfestigkeit der Verbindung deutlich höher liegt, wenn das dickere Bandende oben liegt. Dieser Ausführungsform kommt im Rahmen der Erfindung folglich besondere Bedeutung zu.

In einer bevorzugten Weiterbildung der Erfindung wird vorgeschlagen, dass die Schweißpunkte nach dem Schweißen mit einer Schleifbearbeitung geglättet werden. Das erfindungsgemäße Schweißverfahren zeichnet sich zwar bereits durch eine sehr geringe Gratbildung aus und es werden auch grundsätzlich bereits im Zuge des Schweißens verhältnismäßig glatte Oberflächen erzeugt Die Oberflächenqualität kann jedoch durch die beschriebene Schleifbearbeitung weiter verbessert werden. Dazu kann es zweckmäßig sein, wenn die abgeschliffenen Partikel (Schweißgrate) während der Schleifbearbeitung entfernt werden, z. B. durch eine geeignete Absaugung. Insgesamt wird dann eine besonders feste Bandverbindung mit besonders hoher Oberflächenqualität erreicht, die auch hohen Anforderungen genügt. Optional oder auch ergänzend besteht die Möglichkeit, den Bereich der Bandverbindung und folglich die Schweißpunkte mittels Klebeband abzukleben, so wie dieses z. B. in der Veröffentlichung DE 10 2005 037182 A1 beschrieben ist. Die Oberseite und/oder die Unterseite der Bandverbindung kann vorzugsweise mittels jeweils eines Klebebandabschnittes überklebt werden. Eine solche Vorgehensweise bietet sich insbesondere dann an, wenn auf eine Schleifbearbeitung verzichtet wird. Grundsätzlich kann aber auch eine Bandverbindung abgeklebt werden, welche zuvor einer Schleifbearbeitung unterzogen wurde.

Eine Vorrichtung gemäß der Erfindung ist im Anspruch 10 definiert. Dieser Reibpunkt-Schweißkopf weist zumindest einen rotierend angetriebenen Stift oder einen stiftartigen Vorsprung und zumindest eine rotierend angetriebene Hülse auf, wobei Stift und Hülse in axial entgegengesetzten Richtungen zueinander verschiebbar sind, wobei der Schweißkopf mit zumindest einem Stellantrieb zum Anstellen des Schweißkopfes gegen die Bänder sowie gegebenenfalls zum axialen Verschieben von Stift und/oder Hülse aufweist. Insoweit kann auf einen Reibpunkt-Schweißkopf der bekannten Art zurückgegriffen werden (vgl. z. B. DE 199 55 737 B4).

Um die bereits eingangs beschriebene Fixierung der Bänder zu ermöglichen, weist die erfindungsgemäße Vorrichtung vorzugsweise zumindest eine auslaufseitige Bandklemme zum Fixieren zumindest des Bandendes des ersten Metallbandes und/oder zumindest eine einlaufseitige Bandklemme zum Fixieren zumindest des Bandanfangs des zweiten Metallbandes auf. Solche Bandklemmen, die in an sich bekannter Weise als Klemmbalken ausgebildet sein können oder einen Klemmbalken aufweisen, sind mit einem oder mehreren Betätigungselementen bzw. Betätigungsantrieben verbunden. Insoweit kann es sich beispielsweise um hydraulische und/oder pneumatische Zylinderkolbenanordnungen oder auch um elektromotorische Antriebe handeln.

Die Schweißvorrichtung weist vorzugsweise zumindest eine Höhenverstellvorrichtung zum Anheben und Absenken der Traverse mit den daran befestigten Schweißköpfen und/oder zum Anheben und Absenken der (einzelnen) Schweißköpfe an der Traverse auf. Diese Höhenverstellvorrichtungen weisen entsprechende Antriebe auf bzw. sind als Antriebe ausgebildet, z. B. als Zylinderkolbenanordnungen, z. B. hydraulische oder pneumatische Zylinderkolbenanordnungen. Es liegt folglich im Rahmen der Erfindung, dass sämtliche Schweißköpfe gemeinsam mit z. B. der Traverse angehoben und abgesenkt werden. Bevorzugt sind die Schweißköpfe jedoch auch einzeln anhebbar und absenkbar an der Traverse befestigt. Dieses Anheben und Absenken der Schweißköpfe dient in erster Linie dem Verfahren der Schweißköpfe aus einer Grundposition in eine Vorposition zum Schweißen. In der Grundposition sind die Schweißköpfe mit einem ausreichenden Abstand von dem Banddurchlauf angeordnet, z. B. zumindest 100 mm oberhalb des Banddurchlaufs. In dieser Grundposition durchlaufen die Bänder die Schweißvorrichtung im Normalbetrieb (unter Zug). Sofern dann eine Schweißverbindung erzeugt werden soll, werden die Schweißköpfe mit Hilfe der Höhenverstellvorrichtung bzw. den Höhenverstellvorrichtungen abgesenkt, und zwar in eine Vorposition zum Schweißen, welche z. B. 20 mm über den Bandenden angeordnet sein kann. Diese Positionierung erfolgt positionsgeregelt bzw. weggeregelt, entweder mit der anhebbaren und absenkbaren Traverse oder mit einzelnen abhebbaren und absenkbaren Schweißköpfen. Zum Schweißen werden dann in der an sich bekannten Weise die Schweißköpfe oder die Komponenten der Schweißköpfe (Stift/Hülse) kraftgeregelt mit ggf. zusätzlichen Antrieben verfahren. Die im Zuge dieser Anstellung zurückgelegten Wege liegen in einer Größenordnung von weniger als 30 mm, z. B. 0 mm bis 25 mm.

Nach einem weiteren Vorschlag der Erfindung weist die Vorrichtung mehrere Schweißköpfe auf, welche quer zur Bandlaufrichtung an der Traverse verteilt sind. Wie bereits beschrieben, lässt sich damit die erforderliche Zeit zum Einbringen der gesamten Bandverbindung für die gesamte Bandbreite verringern, da mehrere Schweißpunkte zeitgleich eingebracht werden können. Grundsätzlich besteht die Möglichkeit, über die gesamte Bandbreite eine Vielzahl von Schweißköpfen zu verteilen, sodass in einem einzigen Schweißvorgang die gesamte Bandverbindung erzeugt werden kann. Dazu sind in der Regel verhältnismäßig viele Schweißköpfe erforderlich. Aus diesem Grunde schlägt die Erfindung in einer bevorzugten Ausführungsform vor, dass an der Traverse mehrere Schweißköpfe angeordnet sind, die jedoch entweder gemeinsam an der Traverse oder relativ zu der Traverse gemeinsam verfahrbar sind. Dazu ist wiederum ein geeigneter Antrieb vorgesehen, der z. B. als elektromotorischer Antrieb ausgebildet sein kann.

Um die Bänder im Verbindungsbereich auf einfache Weise übereinander legen zu können, schlägt die Erfindung anhand einer bevorzugten Weiterbildung vor, dass zumindest eine Anhebevorrichtung für den Bandanfang des zweiten Metallbandes und/oder für das Bandende des ersten Metallbandes vorgesehen ist. So kann es zweckmäßig sein, vor den Schweißköpfen eine Anhebevorrichtung für den Bandanfang des zweiten Metallbandes vorzusehen, sodass der Bandanfang des zweiten Metallbandes auf dem Bandende des (vorauslaufenden) ersten Metallbandes abgelegt werden kann. Optional oder ergänzend kann eine (zweite) Anhebevorrichtung vorgesehen sein, welche hinter den Schweißköpfen angeordnet ist und mit welcher das Bandende des ersten Metallbandes anhebbar ist, sodass es auf dem Bandanfang des (nachlaufenden) zweiten Metallbandes abgelegt werden kann. Diese Anhebevorrichtungen können als anhebbare bzw. schwenkbare Überleittische ausgebildet sein, welche in die Grundplattform bzw. den Grundtisch integriert sein können. Auf diese Weise besteht sehr flexibel die Möglichkeit, wahlweise festzulegen, in welcher Anordnung die Metallbänder übereinander bzw. untereinander positioniert werden sollen. Dieses kann insbesondere dann zweckmäßig sein, wenn Bänder unterschiedlicher Dicke miteinander verbunden werden. Der bzw. die Tische können von einem Federelement oder mehreren Federelementen in der Grundposition gehalten und über einen oder mehrere Antriebe, z. B. Zylinderkolbenanordnungen, betätigt werden.

Ferner schlägt die Erfindung vor, dass die erfindungsgemäße Vorrichtung zumindest eine Schleifvorrichtung mit zumindest einem Schleifkopf zur Schleifbearbeitung eines Schweißpunktes aufweist. Diese Schleifvorrichtung kann auch eine Absaugeinrichtung aufweisen. Dabei kann es zweckmäßig sein, jeweils einem Schweißkopf jeweils einen Schleifkopf zuzuordnen, wobei die Schleifköpfe um ein vorgegebenes Maß quer zur Bandlaufrichtung versetzt zu dem jeweiligen Schweißkopf angeordnet sind. Der Versatz dieses Schleifkopfes zu dem korrespondierenden Schweißkopf kann einstellbar sein und vorzugsweise in etwa dem Abstand der zu setzenden Schweißpunkte entsprechen. Bevorzugt werden folglich Schleifköpfe eingesetzt, welche senkrecht auf die Bandverbindung arbeiten, das heißt die Rotationsachse der Schleifköpfe steht senkrecht auf die Bänder. Die Absaugeinrichtung kann dann beispielsweise von einem den jeweiligen Schleifkopf konzentrisch umgebenden Rohr mit Absaugung gebildet werden, wobei endseitig an das Rohr eine auf das Band aufsetzbare Gummidichtung oder Gummilippe vorgesehen sein kann. Bei dieser Ausführungsform wird vorzugsweise folglich nur dort eine Schleifbearbeitung vorgenommen, wo auch die Schweißpunkte angeordnet sind und wo folglich Gratbildung auftreten kann. Alternativ können aber auch andere Schleifvorrichtungen verwendet werden, z. B. eine Schleifbürste, welche quer zur Bandlaufrichtung über den Bereich der Bandverbindung fährt.

Die erfindungsgemäße Vorrichtung ist darüber hinaus mit den erforderlichen Antrieben und einer geeigneten Steuervorrichtung, z. B. Steuerelektronik ausgestattet. Ferner ist es zweckmäßig, wenn Positioniervorrichtungen bzw. Positionsmessvorrichtungen vorgesehen sind, welche insbesondere den Bandanfang und das Bandende erfassen, um folglich die Bänder in den gewünschten Positionen zu stoppen. Die Bandlage des Bandendes und des Bandanfanges wird dabei z. B. mit optischen Messvonichtungen erfasst. Dabei kann nicht nur die Position entlang der Bandlaufrichtung erfasst werden, sondern auch die Position quer zur Bandlaufrichtung, um insbesondere eine Positionierung des Bandanfangs zum Bandende, z. B. eine Zentrierung mittels der beschriebenen Bandklemme zu realisieren.

Sofern nicht nur mehrere Schweißpunkte quer zur Bandlaufrichtung versetzt angeordnet werden sollen, sondern auch mehrere Schweißpunkte oder Schweißpunktreihen hintereinander versetzt eingebracht werden sollen, kann es zweckmäßig sein, wenn die Schweißvorrichtung bzw. das Maschinengestell (insgesamt) entlang der Bandlaufrichtung verfahrbar ist. Dazu kann das Maschinengestell beispielsweise über Führungsrollen oder vergleichbare Führungsmittel in oder an Führungsschienen geführt sein. Ferner ist dann ein geeigneter Antrieb zum Verfahren vorgesehen, z. B. ein hydraulischer Zylinderkolbenantrieb.

Im Folgenden wird die Erfindung anhand einer lediglich ein Ausführungsbeispiel darstellenden Zeichnung näher erläutert. Es zeigen
- Fig. 1: eine erfindungsgemäße Vorrichtung zum Verbinden von Metallbändern in einer vereinfachten Seitenansicht,
- Fig. 2: den Gegenstand nach Fig. 1 in einer Ansicht A,
- Fig. 3: einen Ausschnitt aus dem Gegenstand nach Fig. 1 in einer Ansicht B,
- Fig. 4: einen Ausschnitt X aus dem Gegenstand nach Fig. 1,
- Fig. 5: eine abgewandelte Ausführungsform des Gegenstandes nach Fig. 1,
- Fig. 6: den Gegenstand nach Fig. 5 in einer Ansicht A und
- Fig. 7: eine schematisch vereinfachte Darstellung eines Schweißkopfes zum Reibpunktschweißen.

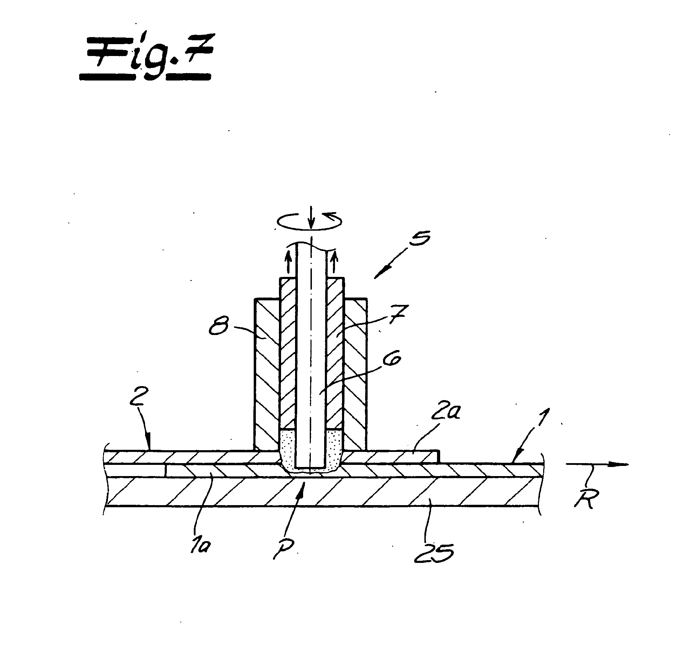

In den Figuren ist eine Vorrichtung zum Verbinden eines Bandendes 1a eines ersten Metallbandes 1 mit dem Bandanfang 2a eines zweiten Metallbandes 2 dargestellt. Eine solche Vorrichtung wird vorzugsweise in den Einlaufbereich einer Bandbehandlungsanlage integriert. In einer solchen Bandbehandlungsanlage, die auch als Bandprozesslinie bezeichnet wird, werden zu Bunden (Coils) aufgewickelte Metallbänder im Einlaufteil abgewickelt, durchlaufen dann verschiedene Behandlungsstationen und werden im Auslaufteil wieder aufgewickelt oder in sonstiger Weise weiterverarbeitet, z. B. zu Blechtafeln geschnitten. Damit die Metallbänder nicht stets neu eingefädelt werden müssen, wird der Bandanfang 2a eines neuen Bundes mit dem Bandende 1a des letzten Bundes verbunden. Dieses erfolgt im Rahmen der Erfindung durch Schweißverbindungen, indem das Bandende 1a und der Bandanfang 2a unter Bildung einer Überlappung übereinander positioniert und im Bereich der Überlappung an mehreren Schweißpunkten miteinander verschweißt werden. Während des Schweißens befinden sich die Bänder in der Ruheposition, das heißt der Bandtransport wird gestoppt. Erfindungsgemäß werden diese Schweißpunkte nun durch Reibpunktschweißen gesetzt. Dazu weist die erfindungsgemäße Vorrichtung ein Maschinengestell 3 auf, welches eine die Metallbänder quer zur Bandlaufrichtung R überspannende Traverse 4 aufweist, an welcher mehrere Reibpunkt-Schweißköpfe 5 angeordnet sind. Die Funktionsweise eines solchen Reibpunkt-Schweißkopfes ist bekannt. Sie ergibt sich anhand der schematischen Darstellung in Fig. 7. Jeder Reibpunkt-Schweißkopf 5 weist einen rotierend angetriebenen Stift 6 oder einen stiftartigen Vorsprung und eine rotierend angetriebene Hülse 7 auf, wobei diese rotierende Hülse 7 von einer weiteren, nicht rotierenden Hülse 8 umgeben ist. Stift 6 und Hülse 7 sind axial in entgegengesetzten Richtungen zueinander verschiebbar. Das Reibpunkt-Schweißen ist grundsätzlich bekannt und wird beispielsweise in der Druckschrift DE 199 55 737 B4 beschrieben.

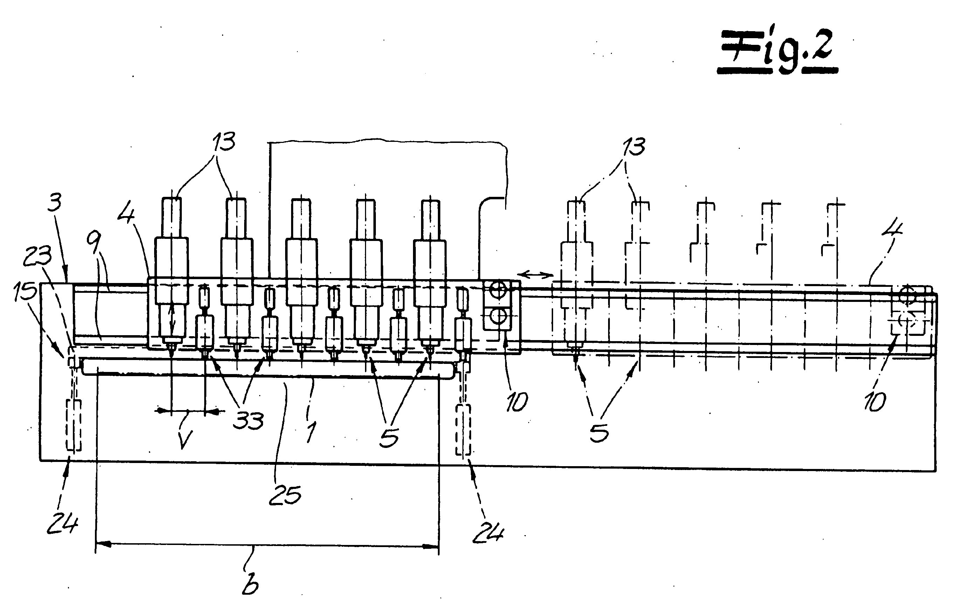

Die Traverse 4 ist an dem Maschinengestell 3 quer zur Bandlaufrichtung verfahrbar befestigt, und zwar mittels Führungsschienen bzw. (horizontalen) Linearführungen 9 und einem geeigneten Antrieb 10, welcher im Ausführungsbeispiel als elektromotorischer Antrieb ausgebildet ist, der über ein Ritzel auf eine Zahnstange 11 arbeitet Mit Hilfe dieses Antriebs lässt sich die Traverse 4 mit den daran angeordneten Schweißköpfen 5 zur geeigneten Positionierung der Schweißköpfe 5 quer zur Bandlaufrichtung R verfahren. Im Übrigen ist in Fig. 2 erkennbar, dass das Maschinengestell 3 so ausgelegt ist, dass die komplette Traverse 4 mit den Schweißköpfen 5 aus der Linie herausgefahren werden kann, um beispielsweise einen Werkzeugwechsel vorzunehmen.

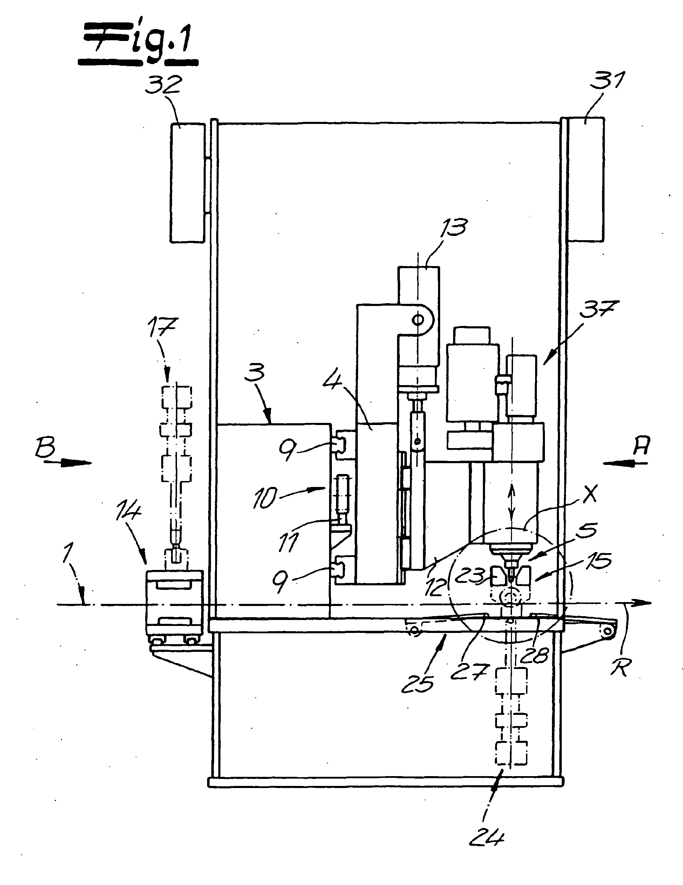

Um die Schweißköpfe 5 aus einer Grundposition in eine Vorposition bzw. Schweißposition zu bringen, sind die Schweißköpfe höhenverstellbar an der Traverse 4 angeordnet. Dazu sind die Schweißköpfe 5 an Schweißkopfhaltem 12 befestigt, wobei diese Schweißkopfhalter 12 an geeigneten Führungen mittels entsprechender Antriebe 13 höhenverstellbar sind. Diese Antriebe 13 sind im Ausführungsbeispiel als Zylinderkolbenanordnungen, z. B. Pneumatikzylinder ausgebildet. In der in Fig. 1 dargestellten (oberen) Grundposition kann das angedeutete Metallband, welches während des Betriebes der Bandbehandlungsanlage unter Zug steht, frei durch die Anlage laufen. Soll eine Schweißverbindung aufgebracht werden, so werden die Schweißköpfe - nachdem die nicht mehr unter Zug stehenden Bänder positioniert sind - mit den Antrieben 13 in die Vorposition für den Schweißvorgang abgesenkt. Im Zuge des Schweißens wird dann - wie in Fig. 7 beschrieben - der Kopf der Schweißvorrichtung selbst bzw. deren Komponenten (Hülse, Stift) kraftgesteuert mittels des Stellantriebes 37 verfahren. Es sind folglich weitere geeignete Antriebe, insbesondere auch für die Rotation von Hülse und/oder Stift vorgesehen, die jedoch Bestandteil der bekannten Schweißvorrichtung sein können und insoweit nicht näher beschrieben werden. Während des Schweißens sind die Bänder (das heißt Bandende und Bandanfang) in der Ruheposition und nicht unter Zug, das heißt sie liegen auf einem Durchlauftisch 25 der Schweißvorrichtung auf, welcher während des Schweißens auch das Widerlager für die Schweißköpfe bilden kann.

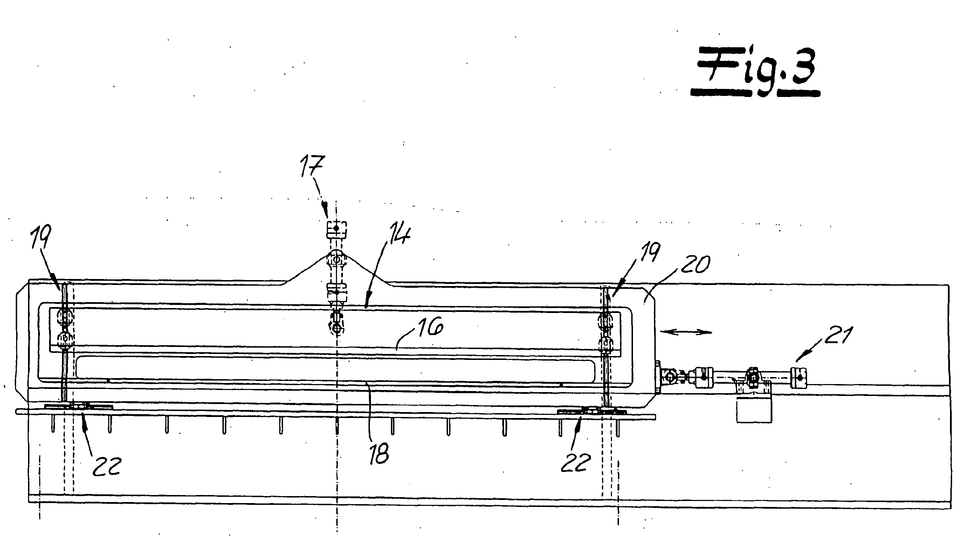

Von besonderer Bedeutung ist gemäß der Erfindung eine Fixierung und Positionierung der Bänder 1, 2 im Überlappungsbereich. Dazu sind eine einlaufseitige Bandklemmvorrichtung 14 und eine auslaufseitige Bandklemmvorrichtung 15 vorgesehen. Die einlaufseitige Bandklemmvorrichtung 14 ist den Schweißköpfen 5 in Bandlaufrichtung vorgeordnet. Sie ist in Fig. 1 angedeutet und in Fig. 3 näher dargestellt. Die einlaufseitige Bandklemmvonichtung 14 weist einen oberen Klemmbalken 16 auf, welcher mittels eines Klemmantriebes 17 gegen einen festen Klemmbalken 18 arbeitet Dazu ist der quer zur Bandlaufrichtung verlaufende Balken 16 auf vertikalen Linearführungen 19 geführt. An den Balken 16 ist der Antrieb 17 in der Ausführungsform als Zylinderkolbenanordnungen (z. B. Hydraulikzylinder) angeschlossen. Mit dieser einlaufseitigen Bandklemme 14 lässt sich das (nachlaufende) zweite Band 2 fixieren. Um den Bandanfang 2a dieses zweiten Bandes 2 relativ zu dem Bandende 1a des ersten Bandes 1 positionieren zu können, z. B. zu zentrieren, ist die Bandklemmvorrichtung 14 gemäß der Erfindung nach Fig. 3 quer zur Bandlaufrichtung verfahrbar. Dazu sind die beschriebenen Klemmbalken in einen Rahmen 20 integriert, welcher insgesamt mit einem Antrieb 21 in der Ausführungsform als Hydraulikzylinder quer zur Bandlaufrichtung (in horizontaler Richtung) verfahrbar ist. Der Rahmen 20 ist dazu an Linearführungen 22 geführt (vgl. Fig. 3).

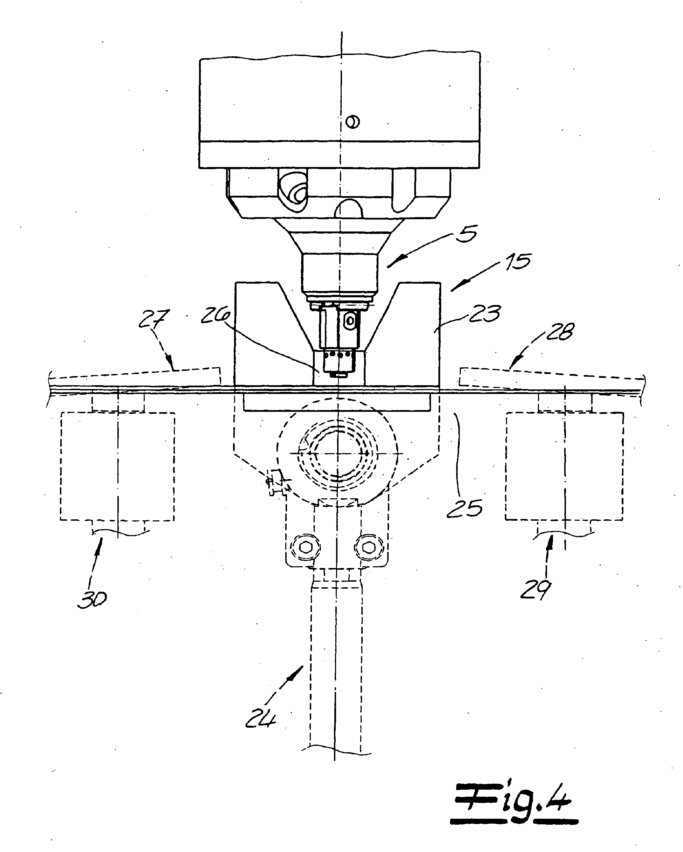

Der Aufbau der auslaufseitigen Bandklemme 15 untersch/eidet sich im Ausführungsbeispiel von dem Aufbau der einlaufseitigen Bandklemme 14. Dazu wird insbesondere auf eine vergleichende Betrachtung der Fig. 1 bis 4 verwiesen, wobei die Bandklemmvorrichtung 14 in Fig. 2 lediglich gestrichelt angedeutet ist. In den Figuren ist erkennbar, dass die auslaufseitige Bandklemmvorrichtung 15 unmittelbar im Bereich der Schweißköpfe 5 und folglich entlang der Bandlaufrichtung R auf Höhe der Schweißköpfe 5 angeordnet ist Diese Bandklemmvorrichtung 15 fixiert folglich nicht nur das Bandende 1a des ersten Bandes 1, sondern auch den Bandanfang 2a des zweiten Bandes 2. Diese Bandklemmvorrichtung 15 weist einen Klemmbalken 23 auf, welcher den Überlappungsbereich quer zur Bandlaufrichtung R überspannt und mit zwei beidseitig des Bandes angeordneten Zylinderkolbenanordnungen 24 betätigbar ist. Dazu ziehen die Zylinderkolbenanordnungen 24 den Klemmbalken 23 nach unten, sodass die Bänder auf dem Durchlauftisch 25 der Vorrichtung fixiert werden. Dadurch dass die sich überlappenden Bänder gemeinsam verklemmt werden, wird verhindert, dass sich die Bänder 1, 2 beim Schweißvorgang gegeneinander verschieben. Der Klemmbalken 23 ist dabei so konzipiert, dass die Schweißköpfe 5 durch eine Ausnehmung 26 des Klemmbalkens 23 hindurchgreifen können, um auf diese Weise Kontakt zu der Bandoberfläche des oben liegenden Bandes zu bekommen und folglich den Schweißpunkt P zu setzen. Es ist folglich gewährleistet, dass die Bandklemme 15 den Schweißvorgang selbst nicht behindert und dennoch eine einwandfreie Fixierung der Bänder 1, 2 exakt im Schweißbereich gewährleistet ist. Optional kann die auslaufseitige Bandklemme aber auch so ausgebildet sein wie die einlaufseitige Bandklemme und dann um ein vorgegebenes Maß hinter der Schweißvorrichtung angeordnet sein. Sie klemmt dann lediglich das erste Band, sodass gegebenenfalls gemäß der Erfindung das Bandende des ersten Bandes relativ zu dem Bandanfang des zweiten Bandes positioniet z. B. zentriet wird. Diese Möglichkeit ist in den Figuren nicht dargestellt.

Das Aufeinanderlegen der Bänder 1,2 bzw. von Bandanfang und Bandende wird im Rahmen der Erfindung dadurch realisiert, dass einlaufseitig eine Anhebevorrichtung 27 in der Ausführungsform als Anhebetisch oder Überleittisch angeordnet ist. Ergänzend ist auslaufseitige eine Anhebevorrichtung, z. B. ein Anhebetisch 28 vorgesehen, der ebenfalls als Überleittisch ausgebildet ist. Diese Tische sind in entsprechende Ausnehmungen des Durchlauftisches 25 integriert. Sie werden z. B. mittels Federkraft in die Grundposition zurückgezogen, in der sie bündig in die Tischoberfläche integriert sind. Gegen die Federkraft lassen sich diese Anhebetische 27, 28 nun aus der Tischebene heraus (nach oben) bewegen, um den jeweiligen Bandteil anzuheben. Dazu sind an die Anhebetische entsprechende Antriebe, z. B. Pneumatikzylinder 29, 30 angeschlossen. Zur Positionierung von Bandende und Bandanfang sind im Übrigen Positionsmessvorrichtungen 31, 32 vorgesehen. So lässt sich z. B. das Bandende 1a des vorauslaufenden ersten Bandes vorfahren und in der Schweißmaschine positionieren. Die genaue Positionierung erfolgt mit der Messvorrichtung 31, die beispielsweise optisch arbeiten kann, z. B. als Lichtschranke oder dergleichen. Anschließend kann nun der Überleittisch 27 angehoben werden. Dann wird der Bandanfang 2a des zweiten Bandes über den Überleittisch vorgefahren und folglich über das Bandende 1 a des ersten Metallbandes angehoben. Die Positionierung kann wiederum über die Messvorrichtungen vorgenommen werden. Soll stattdessen der Bandanfang 2a unter dem Bandende 1a abgelegt werden, so kann dieses über den auslaufseitigen Tisch 28 realisiert werden.

Ferner ist insbesondere in Fig. 2 erkennbar, dass mehrere Schleifvorrichtungen 33 vorgesehen sind, mit welchen sich die Schweißpunkte P glätten lassen. Dazu sind die Schweißvorrichtungen 33 mit nicht näher dargestellten Absaugvorrichtungen ausgerüstet. Dabei ist jedem Schweißkopf 5 ein Schleifkopf 23 zugeordnet, wobei die Schleifköpfe 33 jeweils um ein vorgegebenes Maß V quer zur Bandlaufrichtung versetzt zu dem jeweiligen Schweißkopf 5 angeordnet sind. Vorzugsweise entspricht der Versatz V des Schleifkopfes 33 zu dem korrespondierenden Schweißkopf 5 in etwa dem Abstand der zu setzenden Schweißpunkte. Fig. 2 macht folglich deutlich, dass nach dem Einbringen von fünf Schweißpunkten P in einer bestimmten Position die gesamte Traverse 4 um einen bestimmten Weg quer zur Bandlaufrichtung verfahren wird, der in etwa dem Versatz V entspricht, sodass dann anschließend die nächsten Schweißpunkte P eingebracht werden können und zeitgleich oder zeitlich versetzt die zuvor eingebrachten Schweißpunkte P schleifbearbeitet werden.

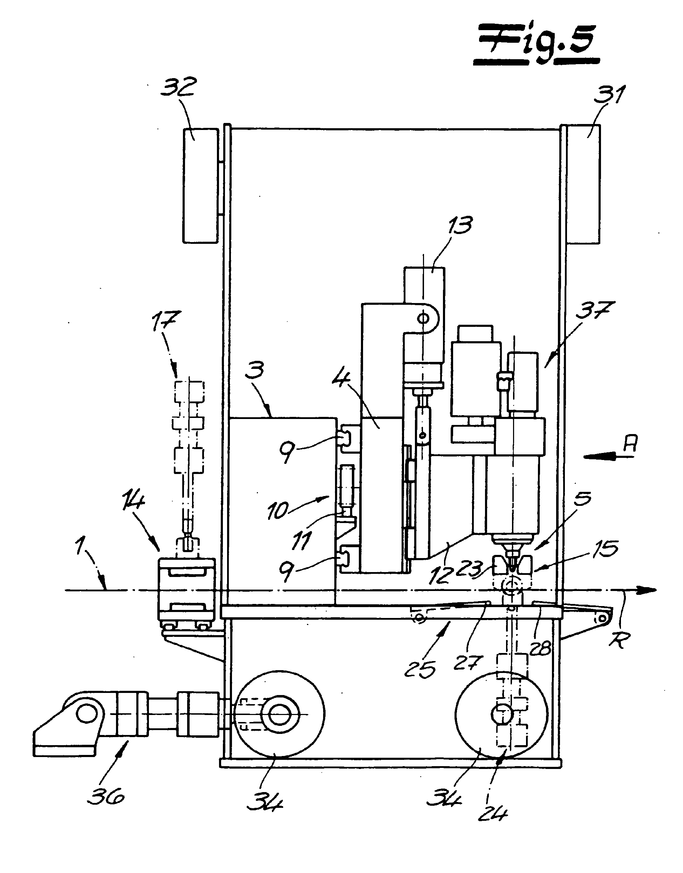

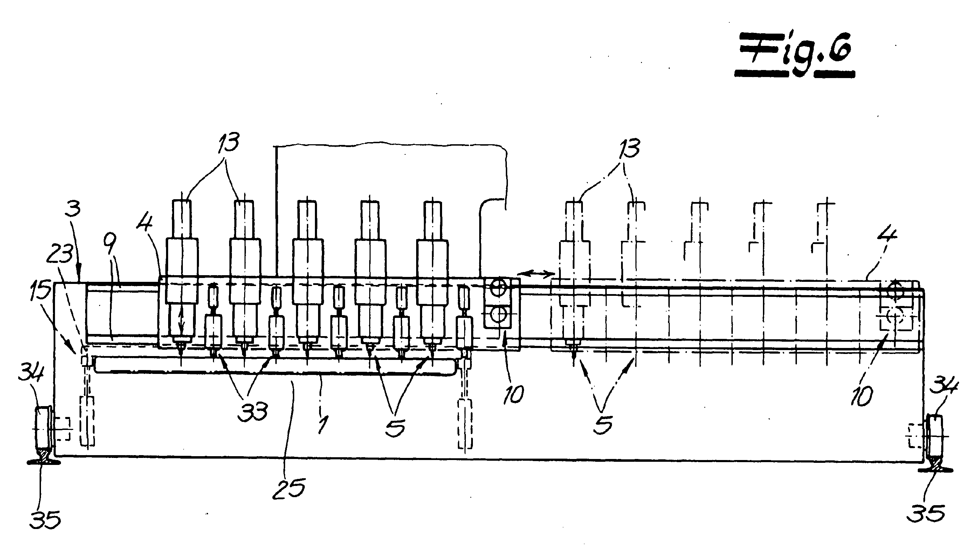

Die Fig. 1 bis 4 betreffen eine erste Ausführungsform, bei welcher vorzugsweise mehrere Schweißpunkte P quer zur Bandlaufrichtung R versetzt eingebracht werden, jedoch in lediglich einer einzigen Schweißpunktreihe. Optional wird in den Fig. 5 und 6 eine abgewandelte Ausführungsform der Erfindung dargestellt, bei welcher sich die Schweißköpfe 5 auch entlang der Bandlaufrichtung R verfahren lassen. Dazu ist das gesamte Maschinengestell 3 entlang der Bandlaufrichtung R verfahrbar. In den Fig. 5 und 6 ist erkennbar, dass das Maschinengestell über Führungsrollen 34 auf Führungsschienen 35 geführt ist und an einen Antrieb 36 angeschlossen ist. Dieser Antrieb 36 ist auch als Hydraulikzylinder ausgebildet Bei diesem mehrreihigen Schweißen werden nach Fertigstellung der ersten Schweißnahtreihe die Bandklemmen geöffnet und die komplette Schweißeinrichtung um den Abstand zweier Schweißnahtreihen verfahren.

Im Übrigen ist die erfindungsgemäße Vorrichtung mit einer geeigneten Steuervorrichtung ausgestattet, welche insbesondere auch eine Datenbank der Schweißparameter und ein vorwählbares Punktmuster speichert.

## Patentansprüche

1. Verfahren zum Verbinden eines Bandendes (1 a) eines ersten Metallbandes (1) mit dem Bandanfang (2a) eines zweiten Metallbandes (2), insbesondere im Einlaufbereich einer Bandbehandlungsanlage,
wobei das Bandende (1 a) und der Bandanfang (2a) unter Bildung einer Überlappung übereinander positioniert und im Bereich der Überlappung an mehreren Schweißpunkten (P) miteinander verschweißt werden,
wobei die Schweißpunkte (P) durch Reibpunktschweißen gesetzt werden, **dadurch gekennzeichnet,**
**dass** das Bandende (1 a) mittels zumindest einer auslaufseitigen Klemmvorrichtung (15) und der Bandanfang (2a) mittels zumindest einer einlaufseitigen Klemmvorrichtung (14) während des Schweißens fixiert werden,
wobei zunächst das Bandende (1 a) des ersten Bandes (1) fixiert und anschließend der Bandanfang (2a) des zweiten Bandes (2) quer zur Bandlaufrichtung relativ zu dem Bandende des ersten Bandes positioniert, z. B. zentriert, und ebenfalls fixiert wird, oder das umgekehrt zunächst der Bandanfang (2a) des zweiten Bandes (2) fixiert und anschließend das Bandende (1 a) des ersten Bandes (1) quer zur Bandlaufrichtung relativ zu dem Bandanfang des zweiten Bandes positioniert, z. B. zentriert, und ebenfalls fixiert wird.

2. Verfahren nach Anspruch 1, **dadurch gekennzeichnet, dass** die Schweißpunkte (P) durch Reibpunktschweißen mit einem Schweißkopf (5) gesetzt werden, welcher einen rotierenden Stift (6) oder stiftartigen Vorsprung und eine den Stift bzw. den stiftartigen Vorsprung umgebende rotierende Hülse (7) aufweist, wobei der Stift (6) und/oder die Hülse (7) durch Rotation und damit erzeugte Reibungswärme das Bandende und den Bandanfang bereichsweise plastifiziert, wobei Stift (6) und Hülse (7) während des Schweißens zumindest zeitweise axial in entgegengesetzten Richtungen zueinander verschoben werden.

3. Verfahren nach Anspruch 1 oder 2, **dadurch gekennzeichnet, dass** zeitgleich und/oder nacheinander mehrere quer zur Bandlaufrichtung (R) beabstandete Schweißpunkte (P) unter Bildung einer sich über die Bandbreite (b) erstreckenden Schweißpunktreihe gesetzt werden, wobei der Abstand zweier benachbarter Schweißpunkte (P) einer Schweißpunktreihe vorzugsweise 20 mm bis 100 mm, z. B. 30 mm bis 70 mm beträgt.

4. Verfahren nach Anspruch 3, **dadurch gekennzeichnet, dass** der Abstand zweier benachbarter Schweißpunkte (P) einer Schweißpunktreihe von der Bandmitte zu einem Bandrand oder zu den Bandrändern hin zunimmt.

5. Verfahren nach einem der Ansprüche 1 bis 4, **dadurch gekennzeichnet, dass** in Bandlaufrichtung (R) hintereinander versetzt mehrere Schweißpunkte (P) oder mehrere Schweißpunktreihen mit jeweils mehreren Schweißpunkten (P) gesetzt werden.

6. Verfahren nach einem der Ansprüche 1 bis 5, **dadurch gekennzeichnet, dass** mit mehreren z. B. quer zur Bandlaufrichtung (R) verteilten Schweißköpfe (5) mehrere Schweißpunkte zeitgleich gesetzt werden.

7. Verfahren nach einem der Ansprüche 1 bis 6, **dadurch gekennzeichnet, dass** das Bandende (1 a) und der Bandanfang (2a) vor dem Schweißen adhäsiv miteinander verbunden werden, z. B. verklebt werden.

8. Verfahren nach einem der Ansprüche 1 bis 7, **dadurch gekennzeichnet, dass** im Falle unterschiedlicher Banddicken von erstem Metallband (1) und zweitem Metallband (2) das Metallband mit größerer Dicke auf der dem Schweißkopf zugewandten Seite angeordnet ist, z. B. oberseitig auf das Metallband mit der geringeren Dicke aufgelegt wird.

9. Verfahren nach einem der Ansprüche 1 bis 8, **dadurch gekennzeichnet, dass** die Schweißpunkte (P) nach dem Schweißen mit einer Schleifbearbeitung geglättet werden, wobei vorzugsweise die abgeschliffenen Partikel während der Schleifbearbeitung entfernt, z. B. abgesaugt werden.

10. Vorrichtung zum Verbinden eines Bandendes (1 a) eines ersten Metallbandes (1) mit dem Bandanfang (2a) eines zweiten Metallbandes (2), z. B. im Einlaufbereich einer Bandbehandlungsanlage, nach einem Verfahren nach einem der Ansprüche 1 bis 9,
mit zumindest einem Gestell (3), welches zumindest eine die Metallbänder quer zur Bandlaufrichtung (R) überspannende Traverse (4) aufweist, an welcher zumindest ein Reibpunkt-Schweißkopf (5) angeordnet ist, **dadurch gekennzeichnet,**
**dass** zumindest eine auslaufseitige Bandklemmvorrichtung (15) zum Fixieren zumindest des Bandendes (1 a) des ersten Metallbandes (1) und eine einlaufseitige Bandklemmvorrichtung (14) zum Fixieren zumindest des Bandanfangs (2a) des zweiten Metallbandes (2) vorgesehen sind,
wobei die einlaufseitige Bandklemmvorrichtung (14) und/oder die auslaufseitige Bandklemmvorrichtung (15), quer zur Bandlaufrichtung verfahrbar ist.

11. Vorrichtung nach Anspruch 10, **dadurch gekennzeichnet, dass** der Reibpunkt-Schweißkopf (5) zumindest einen rotierend angetriebenen Stift (6) oder stiftartigen Vorsprung und zumindest eine rotierend angetriebene Hülse (7) aufweist, wobei Stift (6) und Hülse (7) axial in entgegengesetzten Richtungen zueinander verschiebbar sind, wobei der Schweißkopf (5) mit zumindest einem Stellantrieb (37) zum Anstellen des Schweißkopfes gegen die Bänder sowie gegebenenfalls zum axialen Verschieben von Stift (6) und/oder Hülse (7) aufweist.

12. Vorrichtung nach Anspruch 10 oder 11, mit zumindest einer Höhenverstellvorrichtung zum Anheben und Absenken der Traverse (4) mit den daran befestigten Schweißköpfen (5) und/oder zum Anheben und Absenken der Schweißköpfe (5) an der Traverse (4).

13. Vorrichtung nach einem der Ansprüche 11 bis 12, mit mehreren Schweißköpfen (5), welche quer zur Bandlaufrichtung (R) an der Traverse (4) verteilt sind.

14. Vorrichtung nach einem der Ansprüche 11 bis 13, **dadurch gekennzeichnet, dass** der Schweißkopf (5) oder eine Gruppe mit mehreren Schweißköpfen (5) quer zur Bandlaufrichtung an der Traverse (4) verfahrbar ist und/oder dass die Traverse (4) mit einem oder mehreren daran angeordneten Schweißköpfen (5) quer zur Bandlaufrichtung (R) verfahrbar ist.

15. Vorrichtung nach einem der Ansprüche 11 bis 14, mit zumindest einer Anhebevorrichtung (27) für den Bandanfang (2a) des zweiten Metallbandes (2) zum Ablegen des Bandanfangs (2a) auf dem Bandende (1 a) des ersten Metallbandes (1) und/oder mit zumindest einer Anhebevorrichtung (28) für das Bandende (1 a) des ersten Metallbandes (1) zum Ablegen des Bandanfangs (2a) des zweiten Metallbandes (2) unter dem Bandende (1a) des ersten Metallbandes (1).

16. Vorrichtung nach einem der Ansprüche 11 bis 15, **dadurch gekennzeichnet, dass** eine Bandklemmvorrichtung (14, 15) z. B. die auslaufseitige Bandklemmvorrichtung (15) im Bereich der Schweißköpfe (5) angeordnet ist und z. B. einen Klemmbalken (23) mit einer Ausnehmung (26) aufweist, durch welchen die Schweißköpfe (5) hindurch auf die Bänder (1, 2) arbeiten.

17. Vorrichtung nach einem der Ansprüche 11 bis 16, mit zumindest einer Schleifvorrichtung mit zumindest einem Schleifkopf (33) zur Schleifbearbeitung eines Schweißpunktes (P), wobei die Schleifvorrichtung vorzugsweise eine Absaugeinrichtung aufweist.

18. Vorrichtung nach Anspruch 17, **dadurch gekennzeichnet, dass** jeweils einem Schweißkopf (5) jeweils ein Schleifkopf (33) zugeordnet ist und dass die Schleifköpfe (33) um ein vorgegebenes Maß (V) quer zur Bandlaufrichtung (R) versetzt zu dem jeweiligen Schweißkopf (5) angeordnet sind, wobei der Versatz (V) des Schleifkopfes (33) zu dem korrespondierenden Schweißkopf (5) vorzugsweise einstellbar ist und/oder der Versatz (V) des Schleifkopfes (33) zu dem korrespondierenden Schweißkopf (5) in etwa dem Abstand der zu setzenden Schweißpunkte (P) entspricht.

## Claims

1. A method for connecting the trailing end (1 a) of a first metal strip (1) to the leading end (2a) of a second metal strip (2), particularly in the intake region of a strip processing line,
wherein the trailing end (1a) and the leading end (2a) are positioned on top of one another in the form of an overlapping arrangement and welded to one another at several welding spots (P) in the region of the overlap, and
wherein the welding spots (P) are produced by means of friction spot welding,
**characterized in**
**that** the trailing end (1 a) is fixed by means of at least one clamping device (15) on the outlet side and the leading end (2a) is fixed by means of at least one clamping device (14) on the intake side during the welding process,
wherein the trailing end (1 a) of the first strip (1) is initially fixed and the leading end (2a) of the second strip (2) is subsequently positioned, e.g., centered, relative to the trailing end of the first strip transverse to the strip moving direction and also fixed or, vice versa, the leading end (2a) of the second strip (2) is initially fixed and the trailing end (1 a) of the first strip (1) is subsequently positioned, e.g., centered, relative to the leading end of the second strip transverse to the strip moving direction and also fixed.

2. The method according to Claim 1, **characterized in that** the welding spots (P) are produced by means of friction spot welding with a welding head (5) that features a rotating pin (6) or pin-like projection and a rotating sleeve (7) that surrounds the pin or pin-like projection, wherein the pin (6) and/or the sleeve (7) plasticize the trailing end and the leading end in certain areas due to their rotation and the thusly generated frictional heat, and wherein the pin (6) and the sleeve (7) are at least from time to time axially displaced relative to one another in opposite directions during the welding process.

3. The method according to Claim 1 or 2, **characterized in that** several welding spots (P) are simultaneously and/or successively produced such that they are spaced apart transverse to the strip moving direction (R) and form a welding spot row extending over the strip width (b), wherein the spacing between two adjacent welding spots (P) of a welding spot row preferably amounts to 20 mm to 100 mm, e.g. 30 mm to 70 mm.

4. The method according to Claim 3, **characterized in that** the spacing between two adjacent welding spots (P) of a welding spot row increases from the strip center toward a strip edge or toward the strip edges.

5. The method according to one of Claims 1 to 4, **characterized in that** several welding spots (P) or several welding spot rows that respectively comprise several welding spots (P) are produced behind one another in the strip moving direction (R) in an offset fashion.

6. The method according to one of Claims 1 to 5, **characterized in that** several welding spots are produced simultaneously with several welding heads (5) that are distributed, e.g., transverse to the strip moving direction (R).

7. The method according to one of Claims 1 to 6, **characterized in that** the trailing end (1 a) and the leading end (2a) are adhesively connected to one another, e.g. bonded, prior to the welding process.

8. The method according to one of Claims 1 to 7, **characterized in that**, if the first metal strip (1) and the second metal strip (2) have a different strip thickness, the metal strip with the greater thickness is arranged on the side facing the welding head, e.g., placed on the upper side of the metal strip with the smaller thickness.

9. The method according to one of Claims 1 to 8, **characterized in that** the welding spots (P) are smoothed out after the welding process by means of abrasive processing, wherein the abraded particles are preferably removed during the abrasive processing, e.g., by suction.

10. A device for connecting the trailing end (1 a) of a first metal strip (1) to the leading end (2a) of a second metal strip (2), e.g. in the intake region of a strip processing line, with a method according to one of Claims 1 to 9,
with at least one frame (3) featuring at least one crosshead (4) that spans the metal strips transverse to the strip moving direction (R) and on which at least one friction spot welding head (5) is arranged, **characterized in**
**that** at least one strip clamping device (15) is provided on the outlet side in order to fix at least the trailing end (1 a) of the first metal strip (1) and one strip clamping device (14) is provided on the intake side in order to fix at least the leading end (2a) of the second metal strip (2),
wherein the strip clamping device (14) on the intake side and/or the strip clamping device (15) on the outlet side can be displaced transverse to the strip moving direction.

11. The device according to Claim 10, **characterized in that** the friction spot welding head (5) features at least one rotatively driven pin (6) or pin-like projection and at least one rotatively driven sleeve (7), wherein the pin (6) and the sleeve (7) can be axially displaced relative to one another in opposite directions, and wherein the welding head (5) features at least one actuator (37) for adjusting the welding head relative to the strips and, if applicable, for axially displacing the pin (6) and/or the sleeve (7).

12. The device according to Claim 10 or 11, featuring at least one height adjusting device for raising and lowering the crosshead (4) with the welding heads (5) mounted thereon and/or for raising and lowering the welding heads (5) on the crosshead (4).

13. The device according to one of Claims 11 to 12, featuring several welding heads (5) that are distributed on the crosshead (4) transverse to the strip moving direction (R).

14. The device according to one of Claims 11 to 13, **characterized in that** the welding head (5) or a group of several welding heads (5) can be displaced on the crosshead (4) transverse to the strip moving direction and/or that the crosshead (4) with one or more welding heads (5) arranged thereon can be displaced transverse to the strip moving direction (R).

15. The device according to one of Claims 11 to 14, featuring at least one lifting device (27) for the leading end (2a) of the second metal strip (2) in order to place the leading end (2a) onto the trailing end (1a) of the first metal strip (1) and/or with at least one lifting device (28) for the trailing end (1 a) of the first metal strip (1) in order to place the leading end (2a) of the second metal strip (2) underneath the trailing end (1 a) of the first metal strip (1).

16. The device according to one of Claims 11 to 15, **characterized in that** a strip clamping device (14, 15), e.g. the strip clamping device (15) on the outlet side, is arranged in the region of the welding heads (5) and features, e.g., a clamping bar (23) with a recess (26), through which the welding heads (5) act upon the strips (1, 2).

17. The device according to one of Claims 11 to 16, featuring at least one grinding device with at least one grinding head (33) for abrasively processing a welding spot (P), wherein the grinding device preferably features a suction apparatus.

18. The device according to Claim 17, **characterized in that** one respective grinding head (33) is assigned to each welding head (5), and **in that** the grinding heads (33) are arranged offset relative to the respective welding head (5) transverse to the strip moving direction (R) by a predetermined distance (V), wherein the offset (V) of a grinding head (33) relative to the corresponding welding head (5) preferably is adjustable and/or the offset (V) of a grinding head (33) relative to the corresponding welding head (5) approximately corresponds to the spacing between the welding spots (P) to be produced.

## Revendications

1. Procédé pour relier une fin de bande (1a) d'une première bande métallique (1) avec un début de bande (2a) d'une deuxième bande métallique (2), notamment dans la zone d'entrée d'une installation de traitement de bandes,
la fin de bande (1a) et le début de bande (2a) étant positionnés en superposition sous création d'un chevauchement et étant soudés l'un à l'autre en plusieurs points de soudure (P) dans la zone de chevauchement,
les points de soudure (P) étant placés par soudage ponctuel par friction, **caractérisé en ce que**
pendant le soudage, on fixe la fin de bande (1 a) au moyen d'au moins un dispositif de serrage (15) situé du côté sortie et le début de bande (2a) au moyen d'au moins un dispositif de serrage (14) situé du côté entrée,
d'abord la fin de bande (1 a) de la première bande (1) étant fixée et ensuite le début de bande (2a) de la deuxième bande (2) étant positionné, par ex. centré à la transversale du sens de la marche par rapport à la fin de bande de la première bande et également fixé, ou inversement, d'abord le début de bande (2a) de la deuxième bande (2) étant fixé et ensuite la fin de bande (1 a) de la première bande (1) étant positionnée, par exemple centrée à la transversale du sens de la marche par rapport au début de bande de la deuxième bande et également fixée.

2. Procédé selon la revendication 1, **caractérisé en ce que** les points de soudure (P) sont placés par soudage ponctuel par friction à l'aide d'une tête de soudage (5) laquelle comporte une broche (6) ou saillie de type broche rotative et une douille (7) entourant la broche ou saillie de type broche, la broche (6) et/ou la douille (7) plastifiant par rotation et donc par la chaleur créée par friction la fin de bande et le début de bande par zones, pendant le soudage, la broche (6) et la douille (7) étant déplacées au moins temporairement l'une vers l'autre en direction axiale opposée.

3. Procédé selon la revendication 1 ou 2, **caractérisé en ce que** simultanément et/ou successivement, plusieurs points de soudure (P) écartés à la transversale du sens de la marche de la bande (R) sont placés, en formant une rangée de points de soudure s'étendant sur la largeur de la bande (b), l'écart entre deux points de soudure (P) voisins d'une rangée de points de soudure étant de préférence de 20 mm à 100 mm, par, ex. de 30 mm à 70 mm.

4. Procédé selon la revendication 3, **caractérisé en ce que** l'écart entre deux points de soudure (P) voisins d'une rangée de points de soudure est croissant, du milieu de la bande vers un bord de la bande ou vers les bords de la bande.

5. Procédé selon l'une quelconque des revendications 1 à 4, **caractérisé en ce que** dans le sens de la marche de la bande (R) plusieurs points de soudure (P) ou plusieurs rangées de points de soudure avec chacune plusieurs points de soudure (P) sont placés, en étant décalés l'un derrière l'autre.

6. Procédé selon l'une quelconque des revendications 1 à 5, **caractérisé en ce qu'**avec plusieurs têtes de soudage (5) réparties par ex. à la transversale du sens de la marche de la bande (R), plusieurs points de soudure sont placés simultanément.

7. Procédé selon l'une quelconque des revendications 1 à 6, **caractérisé en ce qu'**on colle ensemble par adhésif la fin de bande (1a) et le début de bande (2a) avant le soudage.

8. Procédé selon l'une quelconque des revendications 1 à 7, **caractérisé en ce que** dans le cas d'épaisseurs de bande différentes de la première bande métallique (1) et de la deuxième bande métallique (2), la bande métallique de la plus grande épaisseur est disposée sur le côté faisant face à la tête de soudage, par ex. **en ce qu'**on la pose sur le côté supérieur de la bande métallique de la plus faible épaisseur.

9. Procédé selon l'une quelconque des revendications 1 à 8, **caractérisé en ce qu'**après le soudage, on lisse les points de soudure (P) par usinage par rectification, les particules éliminées par rectification étant de préférence retirées, par ex. aspirées pendant l'usinage par rectification.

10. Dispositif pour relier une fin de bande (1 a) d'une première bande métallique (1) avec le début de bande (2a) d'une deuxième bande métallique (2), par ex. dans la zone d'entrée d'une installation de traitement de bandes d'après un procédé selon l'une quelconque des revendications 1 à 9,
avec au moins un châssis (3) qui comporte au moins une traverse (4) enjambant les bandes métalliques à la transversale du sens de la marche de la bande (R), sur laquelle est disposée au moins une tête de soudage ponctuel par friction (5) **caractérisé**
**en ce qu'**il est prévu au moins un dispositif de serrage de bande (15) situé du côté sortie pour la fixation d'au moins la fin de bande (1 a) de la première bande métallique (1) et un dispositif de serrage de bande (14) situé du côté entrée pour la fixation d'au moins le début de bande (2a) de la deuxième bande métallique (2),
le dispositif de serrage de bande (14) situé du côté entrée et/ou le dispositif de serrage de bande (15) situé du côté sortie étant déplaçable à la transversale du sens de la marche de la bande.

11. Dispositif selon la revendication 10, **caractérisé en ce que** la tête de soudage ponctuel par friction (5) comporte au moins une broche (6) ou saillie de type broche entraînée en rotation et au moins une douille (7) entraînée en rotation, la broche (6) et la douille (7) étant déplaçables dans des directions axiales opposées, la tête de soudage (5) comportant au moins un servomoteur (37) pour la mise en prise de la tête de soudage contre les bandes ainsi que le cas échéant pour le déplacement axial de la broche (6) et/ou de la douille (7).

12. Dispositif selon la revendication 10 ou 11, avec au moins un dispositif de réglage en hauteur pour relever ou abaisser la traverse (4) avec les têtes de soudage (5) fixées sur cette dernière et/ou pour relever et abaisser les têtes de soudage (5) sur la traverse (4).

13. Dispositif selon l'une quelconque des revendications 11 à 12, avec plusieurs têtes de soudage (5) qui sont réparties sur la traverse (4), à la transversale du sens de la marche de la bande (R).

14. Dispositif selon l'une quelconque des revendications 11 à 13, **caractérisé en ce que** la tête de soudage (5) ou un groupe de plusieurs têtes de soudage (5) est déplaçable sur la traverse (4), à la transversale du sens de la marche de la bande et/ou **en ce que** la traverse (4) est déplaçable à la transversale du sens de la marche de la bande (R) avec une ou plusieurs têtes de soudage (5) disposées sur cette dernière.

15. Dispositif selon l'une quelconque des revendications 11 à 14, avec au moins un dispositif d'élévation (27) pour le début de bande (2a) de la deuxième bande métallique (2), pour déposer le début de bande (2a) sur la fin de bande (1 a) de la première bande métallique (1) et/ou avec au moins un dispositif d'élévation (28) pour la fin de bande (1 a) de la première bande métallique (1), pour déposer le début de bande (2a) de la deuxième bande métallique (2) sous la fin de bande (1a) de la première bande métallique (1).

16. Dispositif selon l'une quelconque des revendications 11 à 15, **caractérisé en ce qu'**un dispositif de serrage de bande (14, 15) par ex. le dispositif de serrage de bande (15) situé du côté extérieur est disposé dans la zone des têtes de soudage (5) et comporte par ex. une barre de serrage (23) avec un évidement (26) à travers lequel les têtes de soudage (5) travaillent sur les bandes (1, 2).

17. Dispositif selon l'une quelconque des revendications 11 à 16, avec au moins un dispositif de rectification (33) pour l'usinage par rectification d'un point de soudure (P), le dispositif de rectification comportant de préférence un système d'aspiration.

18. Dispositif selon la revendication 17, **caractérisé en ce qu'**à chaque fois une tête de soudage (5) est respectivement associée un chariot rectifieur (33) et **en ce que** les chariots rectifieurs (33) sont disposés en étant décalés d'une dimension (V) prédéfinie à la transversale du sens de la marche de la bande (R) par rapport à la tête de soudage (5) concernée, le décalage (V) du chariot rectifieur (33) par rapport à la tête de soudage (5) correspondante étant de préférence réglable et/ou le décalage (V) du chariot rectifieur (33) par rapport à la tête de soudage (5) correspondante étant approximativement conforme à l'écart des points de soudure (P) à placer.
